# EUROPEAN PATENT APPLICATION

(11) **EP 4 579 410 A1**
(43) Date of publication of application: **02.07.2025**
(21) Application number: 24222890.6
(22) Date of filing: 23.12.2024
(51) Int. Cl.: G06F 3/0481, G06F 3/04855, G06F 3/0488

(54) **CONTENT DISPLAY METHOD AND APPARATUS, READABLE MEDIUM, AND ELECTRONIC DEVICE**

(30) Priority: 26.12.2023 CN 202311814621
(71) Applicant: BEIJING YOUZHUJU NETWORK TECHNOLOGY CO. LTD., Beijing 101299 (CN)
(72) Inventor: LI, Donglin, Beijing, 100028 (CN)
(74) Representative: Dentons UK and Middle East LLP

(57) **Abstract**

The present disclosure relates to a content display method and apparatus, a readable medium, and an electronic device. The method includes: displaying a content display interface (5101), where the content display interface is used to display a first content; and displaying a second content based on a display style corresponding to a content display position of the first content (S102), where the second content is associated with the first content. Therefore, a display style of the second content can be dynamically changed based on the content display position of the first content, thereby enriching the content display style and improving the content display effect.

## Description

### CROSS-REFERENCE TO RELATED APPLICATION

This application claims the priority to and benefits of Chinese Patent Application No. 202311814621.9, filed on December 26, 2023. All the aforementioned patent application is hereby incorporated by reference in their entireties.

### TECHNICAL FIELD

The present disclosure relates to the field of data processing technologies, and in particular, to a content display method and apparatus, a readable medium, and an electronic device.

### BACKGROUND

With the development of the Internet and multimedia, network information has a wide range of dissemination effects and rich dissemination forms, for example, text, picture, and video, and a form of short video emerging after the text, picture, and traditional video. Taking a short video scenario as an example, in addition to displaying a video content of a short video, a short-video playback interface may also fixedly display a preset static picture content in a lower left corner of the short-video playback interface. Consequently, the display form is monotonous and the content display effect is poor.

### SUMMARY

The section of Summary is provided to briefly introduce the concepts of the present disclosure, and these concepts will be described in detail later in the section of Detailed Description of the present disclosure. The section of Summary is neither intended to identify key or necessary features of the claimed technical solutions, nor is it intended to be used to limit the scope of the claimed technical solutions.

The present disclosure provides a content display method. The method includes:
displaying a content display interface, where the content display interface is used to display a first content; and
displaying a second content based on a display style corresponding to a content display position of the first content, where the second content is associated with the first content.

The present disclosure further provides a content display apparatus. The apparatus includes:
a first display module, configured to display a content display interface, where the content display interface is used to display a first content; and
a second display module, configured to display a second content based on a display style corresponding to a content display position of the first content, where the second content is associated with the first content.

The present disclosure provides a non-transitory computer-readable medium having a computer program stored thereon, and the computer program, when executed by a processor, causes the steps of the method according to any one embodiment of the present disclosure to be implemented.

The present disclosure provides an electronic device. The electronic device includes:
a memory, having a computer program stored thereon; and
a processor, configured to execute the computer program in the memory to implement the steps of the method according to any one embodiment of the present disclosure.

The other features and advantages of the present disclosure will be described in detail in the following section of Detailed Description.

### BRIEF DESCRIPTION OF DRAWINGS

The foregoing and other features, advantages, and aspects of various embodiments of the present disclosure may become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale. In the accompanying drawings:
Fig. 1 is a schematic flowchart of a content display method according to an embodiment of the present disclosure;
Fig. 2 is a schematic diagram of a display style change based on a video content according to an embodiment of the present disclosure;
Fig. 3 is a schematic diagram of a display style change based on a text content according to an embodiment of the present disclosure;
Fig. 4 is a schematic diagram of a display style change according to an embodiment of the present disclosure;
Fig. 5 is a schematic diagram of a display style change according to an embodiment of the present disclosure;
Fig. 6 is a schematic diagram of a display container change according to an embodiment of the present disclosure;
Fig. 7 is a block diagram of a content display apparatus according to an embodiment of the present disclosure; and
Fig. 8 is a block diagram of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not intended to limit the sequence of functions performed by these apparatuses, modules, or units or interdependence of these apparatuses, modules, or units.

It should be noted that the modifiers "one" and "a plurality of/more" mentioned in the present disclosure are illustrative and not restrictive, and those skilled in the art should understand that unless the context clearly indicates otherwise, the modifiers should be understood as "one or more".

The names of messages or information interacted between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to receiving an active request from the user, prompt information is sent to the user to clearly inform the user that an operation requested by the user will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

Furthermore, it can be understood that the data involved in the technical solutions (including, but not limited to, the data itself and the acquisition or use of the data) shall comply with the requirements of corresponding laws, regulations, and relevant provisions.

In a specific application scenario, a static picture content may include a jump link with an interactive function. For example, taking a product video as an example, a product picture carrying a link of a product may be fixedly displayed in a lower left corner of the product video, and the product picture may be triggered to jump to a details page of the product. Alternatively, taking an activity video as an example, a button carrying a registration link of an activity may be fixedly displayed in a lower left corner of the activity video, and the button may be triggered to jump to a registration page for the activity, and so on. For this static display mode, the display form is single, and the content display effect is poor.

In view of this, the present disclosure provides a content display method and apparatus, a readable medium, and an electronic device, to solve the above technical problems.

The embodiments of the present disclosure are further explained and described below with reference to the accompanying drawings.

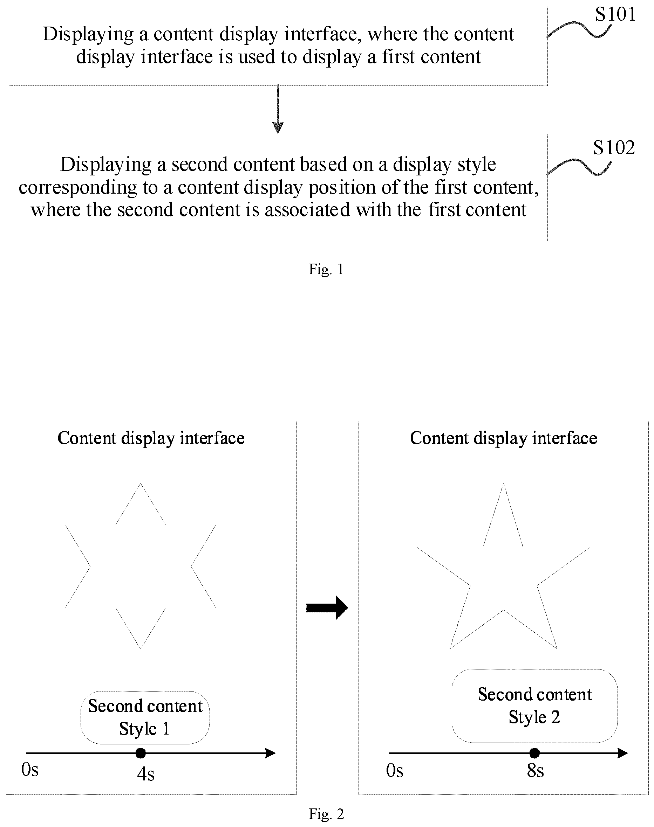

Fig. 1 is a flowchart of a content display method according to an exemplary embodiment of the present disclosure. Referring to Fig. 1, the method includes the following steps.

S101: displaying a content display interface, where the content display interface is used to display a first content.

S102: displaying a second content based on a display style corresponding to a content display position of the first content, where the second content is associated with the first content.

With the above technical solutions, the content display interface for displaying the first content is displayed, the second content is displayed based on the display style corresponding to the content display position of the first content, and the second content is associated with the first content. By means of the above method, a display style of the second content can be dynamically changed based on the content display position of the first content, which can enrich the content display style and improve the content display effect. For example, in a scenario of a short video, a display style of a content related to the short video displayed on a short-video playback interface may dynamically change based on a playback progress of the content of the short video, thereby enriching the content display style and improving the content display effect.

In a possible implementation, the first content is a video content, and displaying the second content based on the display style corresponding to the content display position of the first content may include: displaying the second content based on a display style corresponding to a video playback position of the video content.

For example, the first content may be the video content or may also include a short-video content, so that the display style of the second content can be dynamically changed based on the video playback position of the video content. It should be understood that, referring to Fig. 2, a video playback position of video content may be represented by a playback progress axis of the video content. For example, when the video content is played to 4 seconds (s), the second content in a style 1 is displayed, and when the video content is played to 8s, the second content in a style 2 is displayed. The specific playback progress and the display style may be set as needed and are not limited in the present disclosure. In this way, the associated second content can be dynamically displayed based on a video playback progress, thereby enriching the content display style and improving the content display effect.

In conjunction with a specific use scenario, for example, taking the above product video as an example, when the product video is played to 4s, the second content in the style 1 may be displayed, and when the product video is played to 8s, the second content in the style 2 may be displayed, the second content may be the content related to the product, or may be a picture, a button, etc. carrying a link of the product, and the second content can be triggered to jump to a details page of the product, which is not limited in the present disclosure. In this way, the associated second content can be dynamically displayed based on the video playback progress, thereby enriching the content display style and improving the content display effect.

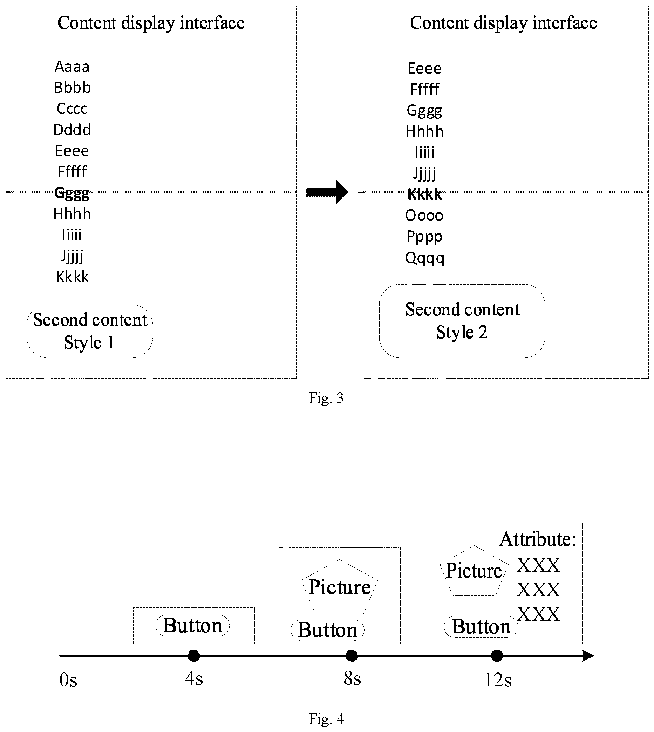

It should be noted that, in addition to the video content, the first content may be a text content, a picture content, etc., which is not limited in the present disclosure. Taking a case of displaying the text content as an example, referring to Fig. 3, when text of a G^{th} paragraph is displayed, the second content in a style 1 is displayed, and when text of a K^{th} paragraph is displayed, the second content in a style 2 is displayed. In this case, a middle position of a screen may be used as a standard line for determining a current content display position, that is, when the K^{th} paragraph of the content is in the middle position of the screen, it is determined that the current text content is displayed to the K^{th} paragraph. Alternatively, a top position of the screen, a bottom position of the screen, or another preset position may be used as a standard line for determining a current content display position, which is not limited in the present disclosure. In addition, in addition to dividing the display position by paragraph, the display positions may also be divided by the row number, the word number, etc., which is not limited in the present disclosure.

Correspondingly, in a case in which the picture content is displayed, when a first picture is displayed, the second content in the style 1 may be displayed; when a second picture is displayed, the second content in the style 2 may be displayed; and so on, and details are not described here in the present disclosure.

It should be understood that, regardless of whether it is the video content, the text content, and the picture content, second content in different corresponding display styles may be configured for different display positions when configuring the above content, so that when a specific display position is reached, the second content in a corresponding display style may be displayed. In this way, the second content in the corresponding display style can be dynamically displayed as the content display position changes.

For ease of description, embodiments are described below by using an example in which the first content is a product video, including a form of video and a form of short video, and this will not be repeated in the present disclosure.

In a possible implementation, displaying the second content based on the display style corresponding to the content display position of the first content may include: displaying the second content based on at least one selected from a group comprising a display content, a display position, and a display size corresponding to the content display position of the first content.

For example, the second content in different display styles may be dynamically displayed based on the content display position of the first content. The different display styles may be display styles in which at least one of display contents, display positions, and display sizes is different, such as display styles in which the display contents are the same but display positions are different, display styles in which the display contents are different and the display sizes are different, or display styles in which the display contents are the same but the display sizes are different, which is not limited in the present disclosure. In this way, the second content in different display styles can be dynamically displayed according to the change of the content display position.

In a possible implementation, the display style may include a display style for the display content, and displaying the second content based on the display content corresponding to the content display position of the first content may include: displaying the second content based on a first display content corresponding to a first display position interval in response to the content display position of the first content being in the first display position interval; and displaying the second content based on a second display content corresponding to a second display position interval in response to the content display position of the first content being in the second display position interval. The second display position interval follows the first display position interval, and the second display content is more than the first display content.

For example, with continued reference to Fig. 2, when the content display position (4s) of the first content is in a first display position interval [4s, 8s), the first display content is displayed, and when the content display position (8s) of the first content is in a second display position interval [8s, 12s), the second display content is displayed, the second display content is more than the first display content. The specific display position interval(s) and the specific display content(s) may be set as needed and are not limited in the present disclosure. In this way, the display content of the second content can be gradually enriched according to the change of the content display position of the first content, thereby improving the content display effect.

In a possible implementation, displaying the second content based on the first display content corresponding to the first display position interval in response to the content display position of the first content being in the first display position interval may include: displaying the second content based on a button content corresponding to the first display position interval in response to the content display position of the first content being in the first display position interval. Displaying the second content based on the second display content corresponding to the second display position interval in response to the content display position of the first content being in the second display position interval may include: displaying the second content based on a button content and a picture content corresponding to the second display position interval in response to the content display position of the first content being in the second display position interval.

For example, taking a product video as an example, and referring to Fig. 4, when the content display position (4s) of the first content is in a first display position interval [4s, 8s), a button content is displayed, and the button is used to jump to a corresponding landing page such as a product details page. When the content display position (8s) of the first content is in a second display position interval [8s, 12s), a button content and a picture content are displayed, and the picture content may be a product picture or a picture related to the product, etc. The specific display position interval(s) and the specific display content(s) may be set as needed and are not limited in the present disclosure. In this way, the display content of the second content can be gradually enriched as the content display position of the first content changes, thereby improving the content display effect.

It should be understood that instead of displaying the button content, an entire display region of the second content may be used as a control for jumping to the corresponding landing page, that is, the display region of the second content may be triggered to jump to the corresponding landing page, which is not limited in the present disclosure.

In a possible implementation, displaying the second content based on the display content corresponding to the content display position of the first content further includes: displaying the second content based on a button content, a picture content, and an attribute content corresponding to a third display position interval in response to the content display position of the first content being in the third display position interval. The third display position interval follows the second display position interval.

For example, with continued reference to Fig. 4, when the content display position (12s) of the first content is in a third display position interval [12s, end position), a button content, a picture content, and an attribute content are displayed, the attribute content may be information such as a product name, or a product description, which is not limited in the present disclosure. The specific display position interval(s) and the specific display content(s) may be set as needed and are not limited in the present disclosure. In this way, the display content of the second content can be gradually enriched as the content display position of the first content changes, thereby improving the content display effect.

It should be understood that the above display order of the display contents is only for exemplary illustrative purposes and the display order of the display contents according to the present disclosure is not limited thereto. For example, the picture content may be displayed before displaying the button content, which is not limited in the present disclosure.

In a possible implementation, the display style may include a display style for the display size, and displaying the second content based on the display size corresponding to the content display position of the first content may include: displaying the second content based on a first display size corresponding to a fourth display position interval in response to the content display position of the first content being in the fourth display position interval; and displaying the second content based on a second display size corresponding to a fifth display position interval in response to the content display position of the first content being in the fifth display position interval. The fifth display position interval follows the fourth display position interval, and the second display size is greater than the first display size.

For example, with continued reference to Fig. 4, when the content display position (4s) of the first content is in a fourth display position interval [4s, 8s), the second content having a first display size is displayed. When the content display position (8s) of the first content is in a fifth display position interval [8s, 12s), the second content having a second display size is displayed. The specific display position interval(s) and the specific display size(s) may be set as needed and are not limited in the present disclosure. Therefore, the display size of the second content can be gradually increased as the content display position of the first content changes, thereby enriching the display form of the second content and improving the content display effect.

It should be understood that the display size of the second content may change synchronously or asynchronously with the display content. For example, in [4s, 8s), the second content is displayed according to the first display content and the first display size, and in [8s, 12s), the second content is displayed according to the second display content and the second display size. Alternatively, in [4s, 8s), the second content may be displayed according to the first display content, where in [4s, 6s), the second content is displayed according to the first display size, and in [6s, 8s), the second content is displayed according to the second display size, which may be specifically set as needed and is not limited in the present disclosure.

In a possible implementation, the display style may include a display style for the display position, and displaying the second content based on the display position corresponding to the content display position of the first content may include: displaying the second content based on a first display position corresponding to a sixth display position interval in response to the content display position of the first content being in the sixth display position interval; and displaying the second content based on a second display position corresponding to a seventh display position interval in response to the content display position of the first content being in the seventh display position interval. The seventh display position interval follows the sixth display position interval, and the first display position is different from the second display position.

For example, with continued reference to Fig. 4, when the content display position (4s) of the first content is in the sixth display position interval [4s, 8s), the second content is displayed on the left side in the content display interface, and when the content display position (8s) of the first content is in the seventh display position interval [8s, 12s), the second content is displayed in the middle of the content display interface. The specific display position interval(s) and the specific display position(s) may be set as needed and are not limited in the present disclosure. In this way, the display position of the second content is adjusted as the content display position of the first content changes, thereby enriching the display form of the second content, and improving the content display effect.

It should be understood that, similar to the above display size, the display position of the second content may change synchronously or asynchronously with the display content and/or display size, which may be specifically set as needed and is not limited in the present disclosure.

In a possible implementation, the method further includes: skipping displaying the second content in response to the content display position of the first content being in an eighth display position interval; and/or displaying an interactive prompt effect for the second content in response to the content display position of the first content being in a ninth display position interval. The ninth display position interval follows the eighth display position interval.

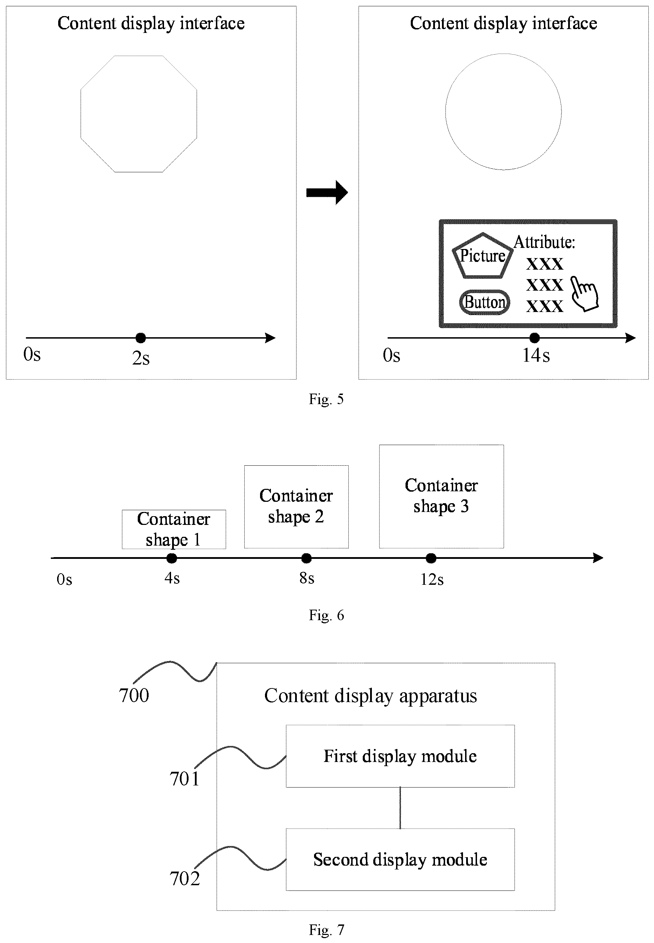

For example, taking a product video as an example, the eighth display position interval may be [0s, 4s), that is, the second content may be displayed starting from 4S, which may be specifically set as needed and is not limited in the present disclosure. Referring to Fig. 5, when the content display position of the first content is in the eighth display position interval [0s, 4s), the second content is not displayed, for example, the second content is not displayed when the content display position of the first content is at 2s.

For example, the ninth display position interval may be [12s, end position), that is, the interactive prompt effect for the second content may be displayed starting from 12s, which may be specifically set as needed and is not limited in the present disclosure. With continued reference to Fig. 5, for example, at 14s, the interactive prompt effect for the second content is displayed. The interactive prompt effect may be a highlight display, a display of a mouse gesture pointing to the second content, etc., which is not limited in the present disclosure.

In this way, in an early stage when a user is browsing the first content, no display region of the first content is obscured, and all the first content can be fully displayed; and in a later stage when the user is browsing the first content, the interactive prompt effect may be displayed to prompt the user to trigger the second content for interactive operation, thereby enriching the display form of the second content and improving the user interaction experience.

It should be understood that, in addition to setting the display style by interval as described above, the display style may be set by position. For example, it is possible to set that the second content is not displayed before 4s, and the interactive prompt effect for the second content is displayed after 12s, which is not limited in the present disclosure.

It should be noted that, in addition to the display position intervals described above for illustrative purposes, other display position intervals, for example, [12s, 16s), [16s, end position), etc., may be set to display the second content in other display styles. The specific display position intervals may be determined as needed and based on a display length of the first content, and are not limited in the present disclosure. In this way, the second content in different display styles can be dynamically displayed according to the change of the content display position, thereby improving the content display effect.

In addition, if the display style is switched between adjacent content display intervals, a switching effect, such as a flip switch and a rotation switch, may be rendered, which is not limited in the present disclosure.

It should be understood that the lengths of different content display intervals may be the same or different, and consecutive content display intervals may or may not be contiguous, which may be specifically set as needed and are not limited in the present disclosure.

In a possible implementation, the method further includes: determining a target display style of the second content based on the content display position and a content feature of the first content, and displaying the second content according to the target display style.

For example, in addition to dynamically changing the display style of the second content based on the content display position of the first content, it is possible to determine the target display style of the second content according to the content display position and the content feature of the first content, thereby displaying the second content based on the target display style.

For example, when the first content is product content, the second content is a product picture content, and the display position of the second content is then dynamically changed based on the content display position of the first content. When the first content is an activity content, the second content is an activity attribute content such as time for the activity, or a place for the activity, etc., and the display size of the second content is then dynamically changed based on the content display position of the first content. That is, for the first content of different types, the second content in different display styles may be displayed.

Alternatively, if the first content played in the interval [4s, 8s) is a first product, the second content is displayed as a first product picture, and if the first content played in the interval [8s, 12s) is a second product, and the second content is displayed as a second product picture. That is, for the first content of a same type but different sub-categories, the second content in different display styles may be displayed.

In addition, the second content in different display styles may be displayed based on difference attributes of the user such as different regions where the user is located, which may be specifically set as needed, and is not limited in the present disclosure. Therefore, the display form of the second content is enriched and the content display effect is improved.

It should be understood that the application scenario in the above embodiments is only for illustrative purposes, and application scenarios of the present disclosure are not limited thereto. For example, the present disclosure may further be applied to a question-answering scenario, the first content may be a question content, and the second content may be a content related to an answer. Taking the first content in a video form as an example, as the playing of the question content progresses, a prompt content related to the answer may be displayed first, then the prompt content may be gradually increased, and finally the answer content may be displayed, etc., which is not limited in the present disclosure.

In a possible implementation, displaying the second content based on the display style corresponding to the content display position of the first content includes: determining rendering data of the second content, and a container position and a container size of a display container corresponding to the second content based on the display style corresponding to the content display position of the first content; and adjusting a position of the display container to the container position, adjusting a size of the display container to the container size, and rendering the rendering data into the display container that is adjusted.

For example, the container size and the container position of the display container need to be adjusted based on the display size and the display position corresponding to the display style, so that the second content may be displayed completely and correctly. Parameters of the display style include a display content parameter, a display size parameter, and a display position parameter. The container size of the display container is adjusted based on the display size parameter, and the container position of the display container is adjusted based on the display position parameter. For example, taking the display style change in Fig. 4 as an example, referring to Fig. 6, the shape of the display container is adjusted. Next, the rendering data is obtained based on the display content parameter, and then the rendering data is rendered into the adjusted display container.

In this way, the corresponding second content is rendered and displayed in the variable display container, so that content display requirements of different display styles are met. Therefore, the second content in different display styles may be dynamically displayed as the content display position changes, thereby improving the content display effect.

Based on the same inventive concept, the present disclosure further provides a content display apparatus. Referring to Fig. 7, the content display apparatus 700 includes:
a first display module 701, configured to display a content display interface, where the content display interface is used to display a first content; and
a second display module 702, configured to display a second content based on a display style corresponding to a content display position of the first content, where the second content is associated with the first content.

For example, the second display module 702 is configured to:
display the second content based on at least one selected from a group comprising a display content, a display position, and a display size corresponding to the content display position of the first content.

For example, the second display module 702 includes:
a first content display module, configured to display the second content based on a first display content corresponding to a first display position interval in response to the content display position of the first content being in the first display position interval; and
a second content display module, configured to display the second content based on a second display content corresponding to a second display position interval in response to the content display position of the first content being in the second display position interval.

The second display position interval follows the first display position interval, and the second display content is more than the first display content.

For example, the first content display module is configured to: display the second content based on a button content corresponding to the first display position interval in response to the content display position of the first content being in the first display position interval.

The second content display module is configured to: display the second content based on a button content and a picture content corresponding to the second display position interval in response to the content display position of the first content being in the second display position interval.

For example, the second display module 702 further includes a third content display module configured to: display the second content based on a button content, a picture content, and an attribute content corresponding to a third display position interval in response to the content display position of the first content being in the third display position interval. The third display position interval follows the second display position interval.

For example, the second display module 702 is configured to:
display the second content based on a first display size corresponding to a fourth display position interval in response to the content display position of the first content being in the fourth display position interval; and
display the second content based on a second display size corresponding to a fifth display position interval in response to the content display position of the first content being in the fifth display position interval, where the fifth display position interval follows the fourth display position interval, and the second display size is greater than the first display size.

For example, the second display module 702 is configured to:
display the second content based on a first display position corresponding to a sixth display position interval in response to the content display position of the first content being in the sixth display position interval; and
display the second content based on a second display position corresponding to a seventh display position interval in response to the content display position of the first content being in the seventh display position interval,
where the seventh display position interval follows the sixth display position interval, and the first display position is different from the second display position.

For example, the apparatus 700 further includes:
a non-display module, configured to skip displaying the second content in response to the content display position of the first content being in an eighth display position interval; and/or
a prompt module, configured to display an interactive prompt effect for the second content in response to the content display position of the first content being in a ninth display position interval, where the ninth display position interval follows the eighth display position interval.

For example, the apparatus 700 further includes a third display module configured to:
determine a target display style of the second content based on the content display position and a content feature of the first content, and display the second content according to the target display style.

For example, the second display module 702 is configured to:
determine rendering data of the second content, and a container position and a container size of a display container corresponding to the second content based on the display style corresponding to the content display position of the first content; and
adjust a position of the display container to the container position, adjust a size of the display container to the container size, and render the rendering data into the display container that is adjusted.

For example, the second display module 702 is configured to:
display the second content based on a display style corresponding to a video playback position of the video content.

With respect to the apparatus in the above embodiment, the specific manner in which each module performs an operation has been described in detail in the embodiments relating to the method, and will not be described in detail herein.

Based on the same concept, an embodiment of the present disclosure further provides a non-transitory computer-readable medium having a computer program stored thereon, and the computer program, when executed by a processor, causes the steps of the content display method described above to be implemented.

Based on the same concept, an embodiment of the present disclosure further provides an electronic device. The electronic device includes:
a memory, having a computer program stored thereon; and
a processor, configured to execute the computer program in the memory to implement the steps of the content display method described above.

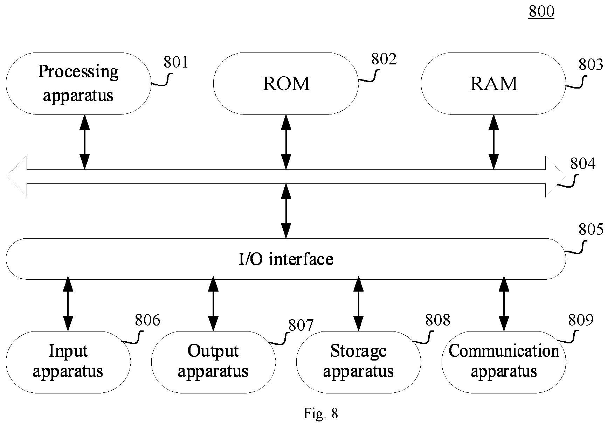

Reference is made to Fig. 8 below, which is a schematic diagram of a structure of an electronic device 800 suitable for implementing an embodiment of the present disclosure. The terminal device in the embodiments of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (such as, a vehicle navigation terminal), and fixed terminals such as a digital television (TV) and a desktop computer. The electronic device shown in Fig. 8 is merely an example, and shall not impose any limitation on the function and scope of use of the embodiments of the present disclosure.

As shown in Fig. 8, the electronic device 800 may include a processing apparatus (e.g., a central processing unit, a graphics processor, etc.) 801 that may perform a variety of appropriate actions and processing in accordance with a program stored in a read-only memory (ROM) 802 or a program loaded from a storage apparatus 808 into a random-access memory (RAM) 803. The RAM 803 further stores various programs and data required for the operation of the electronic device 800. The processing apparatus 801, the ROM 802, and the RAM 803 are connected to each other through a bus 804. An input/output (I/O) interface 805 is also connected to the bus 804.

Generally, the following apparatuses may be connected to the I/O interface 805: an input apparatus 806 including, for example, a touchscreen, a touchpad, a keyboard, a mouse, a camera, a microphone, an accelerometer, and a gyroscope; an output apparatus 807 including, for example, a liquid crystal display (LCD), a speaker, and a vibrator; the storage apparatus 808 including, for example, a magnetic tape and a hard disk; and a communication apparatus 809. The communication apparatus 809 may allow the electronic device 800 to perform wireless or wired communication with other devices to exchange data. Although Fig. 8 shows the electronic device 800 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, the embodiment of the present disclosure includes a computer program product, which includes a computer program carried on a non-transitory computer-readable medium, the computer program includes program codes for performing the method shown in the flowchart. In such an embodiment, the computer program may be downloaded from a network through the communication apparatus 809 and installed, or installed from the storage apparatus 808, or installed from the ROM 802. When the computer program is executed by the processing apparatus 801, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program, the program may be used by or in combination with an instruction execution system, apparatus, or device. In the present disclosure, the computer-readable signal medium may include a data signal propagated in a baseband or as a part of a carrier, the data signal carries the computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, communication may be performed using any currently known or future-developed network protocol such as a hypertext transfer protocol (HTTP), and interconnection with digital data communication (e.g., a communication network) in any form or medium may be achieved. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs, when the one or more programs are executed by the electronic device, the electronic device is caused to: display a content display interface, where the content display interface is used to display a first content; and display a second content based on a display style corresponding to a content display position of the first content, where the second content is associated with the first content.

The computer program code for performing the operations of the present disclosure may be written in one or more programming languages or a combination thereof, the above programming languages include, but are not limited to, an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagrams in the accompanying drawings illustrate the possibly implemented system architecture, functions, and operations of the system, method, and computer program product according to various embodiments of the present disclosure. In this regard, each block in the flowcharts or block diagrams may represent a module, a program segment, or a part of code, and the module, the program segment, or the part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules described in the embodiments of the present disclosure may be implemented by software, or may be implemented by hardware. The names of the modules in a certain scenario do not constitute a limitation on the modules themselves.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The foregoing descriptions are merely some embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of the present disclosure. For example, a technical solution formed by replacing the foregoing features with technical features with similar functions disclosed in the present disclosure (but not limited thereto) also falls within the scope of the present disclosure.

In addition, although the various operations are described in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are merely exemplary forms for implementing the technical solutions defined by the claims. With respect to the apparatus in the above embodiment, the specific manner in which each module performs an operation has been described in detail in the embodiments relating to the method, and will not be detailed herein.

## Claims

1. A content display method, comprising:
displaying a content display interface (S101), wherein the content display interface is used to display a first content; and
displaying a second content based on a display style corresponding to a content display position of the first content (S102), wherein the second content is associated with the first content.

2. The content display method according to claim 1, wherein the displaying a second content based on a display style corresponding to a content display position of the first content comprises:
displaying the second content based on at least one selected from a group comprising a display content, a display position, and a display size corresponding to the content display position of the first content.

3. The content display method according to claim 2, wherein displaying the second content based on the display content corresponding to the content display position of the first content comprises:
displaying the second content based on a first display content corresponding to a first display position interval in response to the content display position of the first content being in the first display position interval; and
displaying the second content based on a second display content corresponding to a second display position interval in response to the content display position of the first content being in the second display position interval,
wherein the second display position interval follows the first display position interval, and the second display content is more than the first display content.

4. The content display method according to claim 3, wherein the displaying the second content based on a first display content corresponding to a first display position interval in response to the content display position of the first content being in the first display position interval comprises:
displaying the second content based on a button content corresponding to the first display position interval in response to the content display position of the first content being in the first display position interval; and
the displaying the second content based on a second display content corresponding to a second display position interval in response to the content display position of the first content being in the second display position interval comprises:
displaying the second content based on a button content and a picture content corresponding to the second display position interval in response to the content display position of the first content being in the second display position interval.

5. The content display method according to claim 4, wherein displaying the second content based on the display content corresponding to the content display position of the first content further comprises:
displaying the second content based on a button content, a picture content, and an attribute content corresponding to a third display position interval in response to the content display position of the first content being in the third display position interval, wherein the third display position interval follows the second display position interval.

6. The content display method according to claim 2, wherein displaying the second content based on the display size corresponding to the content display position of the first content comprises:
displaying the second content based on a first display size corresponding to a fourth display position interval in response to the content display position of the first content being in the fourth display position interval; and
displaying the second content based on a second display size corresponding to a fifth display position interval in response to the content display position of the first content being in the fifth display position interval,
wherein the fifth display position interval follows the fourth display position interval, and the second display size is greater than the first display size.

7. The content display method according to claim 2, wherein displaying the second content based on the display position corresponding to the content display position of the first content comprises:
displaying the second content based on a first display position corresponding to a sixth display position interval in response to the content display position of the first content being in the sixth display position interval; and
displaying the second content based on a second display position corresponding to a seventh display position interval in response to the content display position of the first content being in the seventh display position interval,
wherein the seventh display position interval follows the sixth display position interval, and the first display position is different from the second display position.

8. The content display method according to any one of claims 1 to 7, further comprising:
skipping displaying the second content in response to the content display position of the first content being in an eighth display position interval; and/or
displaying an interactive prompt effect for the second content in response to the content display position of the first content being in a ninth display position interval, wherein the ninth display position interval follows the eighth display position interval.

9. The content display method according to any one of claims 1 to 8, further comprising:
determining a target display style of the second content based on the content display position and a content feature of the first content, and displaying the second content according to the target display style.

10. The content display method according to any one of claims 1 to 9, wherein the displaying a second content based on a display style corresponding to a content display position of the first content comprises:
determining, based on the display style corresponding to the content display position of the first content, rendering data of the second content, and a container position and a container size of a display container corresponding to the second content; and
adjusting a position of the display container to the container position, adjusting a size of the display container to the container size, and rendering the rendering data into the display container that is adjusted.

11. The content display method according to any one of claims 1 to 10, wherein the first content is a video content, and the displaying a second content based on a display style corresponding to a content display position of the first content comprises:
displaying the second content based on a display style corresponding to a video playback position of the video content.

12. A content display apparatus (700), comprising:
a first display module (701), configured to display a content display interface, wherein the content display interface is used to display a first content; and
a second display module (702), configured to display a second content based on a display style corresponding to a content display position of the first content, wherein the second content is associated with the first content.

13. A computer-readable medium having a computer program stored thereon, wherein the computer program, when executed by a processor, causes the steps of the method according to any one of claims 1 to 11 to be implemented.

14. An electronic device, comprising:
a memory, having a computer program stored thereon; and
a processor, configured to execute the computer program in the memory to implement the steps of the method according to any one of claims 1 to 11.
